# EUROPEAN PATENT APPLICATION

(11) **EP 1 422 632 A2**
(43) Date of publication of application: **26.05.2004**
(21) Application number: 03024161.6
(22) Date of filing: 20.10.2003
(51) Int. Cl.: G06F 17/21

(54) **Method and apparatus to process portable document format data containing transparency**

(30) Priority: 29.10.2002 US 282947
(71) Applicant: Esko-Graphics A/S, 2750 Ballerup (DK)
(72) Inventor: Boonen, Paul, J., J., 3910 Neerpelt (BE)
(74) Representative: Bird, Ariane

(57) **Abstract**

A method, software product, and apparatus to convert data in a first PDL format, e.g., PDF to data in a second PDL format. The first and second PDLs each support a respective set of transparency modes. The method comprising receiving the data in the first PDL format, parsing the received data, and converting each object in the first PDL format to a corresponding object in the second PDL format,. The converting includes, for any object that has transparency of a mode having a corresponding mode in the second PDL format, converting the transparency and transparency mode in the first PDL format to the corresponding transparency and transparency mode in the second PDL format such that the objects that have transparency are editable in the second PDL format. The second PDL format is one for which a RIP that supports transparency is available. One version includes converting to an intermediate format. The converting to the intermediate format includes, for any object that has transparency of a mode having a corresponding mode in the second PDL format, removing the transparency and adding an annotation indicating transparency and from which the original transparency specification can be obtained, and then converting the intermediate mode to the second PDL format. The converting from the intermediate mode includes replacing any annotation indicating transparency with the corresponding transparency specification in the second PDL format.

## Description

### BACKGROUND

The present invention relates to pre-press, color reproduction, and electronic printing systems. In particular, the present invention relates to a method and apparatus to process data provided in Portable Document Format (PDF) data containing transparency.

"Portable Document Format" (PDF®) (Adobe Systems, Inc., San Jose, California) is a page description language (PDL) format that is fast becoming the de facto standard for digital document exchange in print production environments. PDF files are cross-platform, cross application, operating system (OS) independent, compressed, and self-contained such that a single PDF file can contain all the components of a typical print project: fonts, illustrations, scans, text, and layout elements.

A page description language (PDL) format such as PDF is a format that describes a list of objects, which, when interpreted, generates graphic objects such as linework, including text, continuous tone (CT) images, paths-each a set of one or more vector or spline segments that describes a shape or set of line segments, bounding boxes-"invisible" rectangles that define the boundaries of an object), and so forth. Paths may have attributes such as stroke and fill, and may define, among other things, bounds of objects, objects themselves, and clipping masks which, when associated with an object, define which part of the object is visible. Linework, paths, CT images, and so forth may also each have transparency.

Interpreting a PDL file generates a display list of objects, and these objects normally are rasterized (raster image processed, "RIPped") to a pixel format prior to printing or display. Such concepts would be well known to those of ordinary skill in the art.

Adobe introduced advanced transparency features in version 1.4 of PDF and version 5 of the related Adobe Acrobat® software application (Adobe Systems, Inc., San Jose, California). Adobe's application Illustrator (version 9 or 10) uses PDF 1.4 as its native file format. The inclusion of support for transparency has caused several problems in the pre-press industry. Because the transparency features of PDF 1.4 are defined in such a way that relatively advanced algorithms are required to calculate press-ready color separations. Color separations are typically determined using raster image processors (RIPs), and RIPs that support the advanced algorithms needed for PDF 1.4 transparency support are not readily available. Furthermore, several experts assert that the PDF 1.4 specification is vague so that it is relatively difficult to define a single "correct" way of outputting press-ready separations. For example, PDF 1.4 includes overprint modes with a non-mathematical description leaving all room for perceptual interpretations etc. The problem is specifically visible where there are many regions that use spot colors, as occurs, for example, in packaging design.

For more information on the transparency in PDF version 1.4, see Adobe Systems Incorporated, *PDF Reference: Version 1.4, Third Edition,* Addison-Wesley, December 2001, ISBN 0201758393. See also: Adobe Systems Incorporated: *Transparency in PDF,* Adobe Developer Technologies, Technical Note #5407, Revised Nov., 2000, available on the Web at
http://partners.adobe.com/asn/developer/acrosdk/docs/PDF_Transparency.pdf.
Technical Note #5407 titled *Transparency in PDF* is incorporated herein by reference.

A common prior-art method to generate separations of PDF documents that include object(s) having transparency is to use Adobe's own "PDF-TO-PS" module, also called the Adobe "flattener" (Adobe Systems, Inc, San Jose, California), that converts PDF1.4 document into the simpler "PostScript" (PS, PS-3 for PostScript version 3, etc.) format. PostScript® (Adobe Systems, Inc, San Jose, California) is a PDL commonly used for printing. To print a PS-3 PDL document, a raster image processor (RIP) converts the PS-3 document to raster pixel format, i.e., raster image processes (RIPs) the document. Flattening converts the objects from a device-independent format (PDF) format into a format that is visually equivalent but does not contain transparency; this format can be represented in PostScript. Flattening might convert a region containing one or more linework objects that have transparency into a pixel data (continuous tone, CT) region.

While some present day software applications such as RIPs and workflow systems claim to be able to process PDF1.4 with transparency, such software applications typically first flatten the image, e.g., using this flattener.

The following is from Adobe Systems Incorporated, *Achieving Reliable Print Output with Transparency,* Nov. 2001, available on the Web at
http://www.adobe.com/products/postscript/pdfs/TransHowToGuidel.pdf.
The Adobe PostScript® language does not support Adobe's transparency in native device-independent format. For this reason, PostScript desktop printers, Adobe PostScript Level 2 high-end printers, and most Adobe PostScript 3 high-end production devices and RIPs cannot accept and process "live" transparency information on the fly.
To print correctly, all transparent objects in a graphic must, at some point in every workflow, be flattened. Flattening converts the objects from a device-independent format into a format that is visually equivalent but does not contain transparency; this format can be represented in PostScript.
In Adobe applications, flattening automatically occurs any time the transparent artwork is either:
Printed from its native program (e.g., Illustrator 9) or a program that supports the originating program's native format.
Saved in a file format other than a native format, so it can be placed or linked to other applications in the design or prepress workflow.
Typically, a file is saved into a non-native, flattened format using "Save As" or "Export" to make an EPS or another file, or when the document is converted to PostScript by printing to disk. Flattened formats include PostScript, EPS, DCS, PDF 1.2 and 1.3, GIF, JPEG, BMP, and non-PhotoShop 6.0 TIFF images.

Thus, according to Adobe, "all transparent objects in a graphic must, at some point in every workflow, be flattened." Flattening, for example using the Adobe flattener has the following serious shortcomings:
**Quality.** Because flattening might convert a region containing one or more linework objects that have transparency into a pixel data region, the overall quality of the resulting set of separations is far from optimal. The pixel data areas are typically not as sharp as the linework areas, e.g., may have jagged edges.
**Speed.** For complex documents, the flattening process is computationally complex and thus can take lots of time. RIPping may also take longer; regions containing pixel data typically take longer to RIP.
**Incorrect separations with special colors.** Flattening may convert some linework regions that were specified in the PDF document to be printed using special spot colors, e.g., PANTONE colors or using special inks, e.g., metallic inks, into process color reparations. Flattening typically converts linework regions to pixel data regions that are typically created from four standard process-inks CMYK (cyan, magenta, yellow and black). Accurately reproducing special colors, or special inks such as metallic inks, is important in many applications, especially packaging. The inability of flattening to support special spot colors or special inks is unacceptable for much packaging work.

Because of flattening's inability to support special spot colors and special inks, and because flattening converts linework to pixel data, transparency is not often used in packaging work and other such applications.

There is thus a need for a method of using the transparency features of PDF for pre-press work, for example pre-press projects that use spot colors or special inks.

Eventually, RIPs that properly support the transparency feature of modem (v. 1.4 or later) PDF documents will become available. For example, a RIP that supports transparency renders linework objects as linework objects, and renders objects in the inks specified in the PDF document. Until then, there is a need in the art for a method of using the transparency features of PDF.

While Adobe PDF is one page description language (PDL) format, there also are in existence other PDL formats that support transparency, and for which RIPS and other applications are available. One way of using the transparency features of PDF would be to first convert a job in PDF to a job in such other PDL formats, the converting also converting the transparency features, and then use the application, e.g., the RIP for such other PDL. In the case of a set of overlapping objects, some of which have transparency, the set of objects would then still remain editable after conversion to the second format.

Several graphic applications are known that use as their internal formats a non-PDF page description language that supports one or more transparency modes. Some of these modes may be similar or a subset of those supported in PDF 1.4. Because of the complexity of the PDF 1.4 transparency model, few applications are able to convert PDF 1.4 format files to their own native formats, keeping the transparency intact. Typically, such applications first flatten any regions that includes transparent objects.

Thus there is a need in the art for a method to convert a document in a first PDL format, e .g., PDF, that supports transparency into a second PDL format that supports transparency, the conversion also converting the transparency specification of objects in the first format to the corresponding transparency specification in the second PDL format. The second format is one for which a desired software application program, e.g., a RIP, is available that supports the transparency feature. For example, a RIP that supports transparency renders linework objects as linework objects, and renders objects in the inks specified in the PDL.

The problem of a format that supports transparency when many graphic applications do not support transparency is well recognized. For example, Enfocus Software, Inc., San Mateo, CA (part of Enfocus Software, Gent Belgium), has a set of applications called Instant PDF V2.0 or later, Enfocus PitStop Professional V5.0 or later, and Enfocus PitStop Server V2.0 or later. These applications support for editing and pre-flighting PDF documents. Pre-flighting is the process of checking documents for printability, including the availability of all fonts, and so forth. Enfocus has published on the Web a "Knowledge base" titled "Transparency and PDF Version Numbers" (see http://www.enfocus.com/support/knowledgeBase/showarticle.php?kbnr=32) that states:
"PDF files containing transparency cause problems in many production workflows, because quite some RIPs and prepress tools are not (yet) equipped to correctly deal with its complications."
   ···
   ···
"Avoiding transparency in PDF is an important issue (at least today), because transparency is a major headache for many RIPs and prepress workflows." "One cannot avoid transparency by simply checking the PDF 1.4 version number, since users can easily (and unknowingly) introduce transparency in a PDF 1.3 document.
· The only way to avoid transparency is using good pre-flight tools, such as the Enfocus PDF Profile. As an added benefit, the PDF Profile checks for many other important quality issues as well."

U.S. Patent 6,211,881 to Gabler, et al., issued April 3, 2001 and titled "Image format conversion with transparency color adjustment" (hereinafter "Gabler") describes image format conversion techniques that provide improved conversion from an image format supporting transparency to an image format not supporting transparency. The techniques therein however describe pixel formats, e.g., JPEG and GIFF, and not structured documents such as those that use a graphic language to define a document that includes linework and continuous tone (pixel) images. The Gabler technique replaces a transparency color in an original image format prior to format conversion. Consequently, the format conversion uses the replacement transparency color instead of the original transparency color, and thus is able to provide improved image conversion when converting from an image format supporting transparency to an image format not supporting transparency. In other words, any transparent color is replaced with an opaque color that gives the same visual impression as the transparent color would have.

Furthermore, the Gabler technique works for pixel data and is not specified in terms of converting from a first page description language to a second page description language. In the case of a set of overlapping objects some of which are transparent, the set of objects are no longer editable after conversion by the Gabler technique.

### SUMMARY

Described herein are a method, product, and apparatus to convert data in a first PDL format-in particular, a universal PDL such as PDF 1.4 or later-to data in a second PDL format. The first and second PDLs each support a respective set of transparency modes. The method comprising receiving the data in the first PDL format, parsing the received data, and converting each object in the first PDL format to a corresponding object in the second PDL format. The converting includes, for any object that has transparency of a mode having a corresponding mode in the second PDL format, converting the transparency and transparency mode in the first PDL format to the corresponding transparency and transparency mode in the second PDL format such that the objects that have transparency are editable in the second PDL format. The second PDL format is one for which there is a desired graphic application that supports transparency. One such graphic application is a RIP that supports transparency. One version of the method includes converting to an intermediate format. The converting to the intermediate format includes, for any object that has transparency of a mode having a corresponding mode in the second PDL format, removing the transparency and adding an annotation indicating transparency and from which the original transparency specification can be obtained, and then converting the intermediate mode to the second PDL format. The converting from the intermediate mode includes replacing any annotation indicating transparency with the corresponding transparency specification in the second PDL format.

### BRIEF DESCRIPTION OF THE DRAWINGS

In order to show the features of the invention, without any limitation implied therein, several embodiments of the invention are described in greater detail, with reference to the enclosed drawings in which:
FIG. 1 shows a prior art process of RIPping a PDF document that includes transparency. The process includes flattening.
FIG. 2A shows a typical processing system in which an embodiment of the present invention may be implemented. While a computer system such as shown in FIG. 2A is prior art, the computer system when operating according to the present invention is not prior art.
FIG. 2B shows an embodiment of the invention that converts the first PDL format (PDF) to the second PDL format (GRS) operating on a computer system such as shown in FIG. 2A.
FIG. 3 shows an embodiment of the invention operating using a PDF aware application that converts the PDF to an intermediate format, e.g., PS-3, and a step that converts the intermediate formal to the second PDL format, e.g., GRS.

### DETAILED DESCRIPTION

Embodiments of the present invention are now described more fully. Described herein is a method and apparatus to convert a file that is in a first PDL format that supports transparency and converting it to a second PDL format that also supports transparency so that transparency aware applications such as RIPs and work flow applications that support the second PDL format-including transparency features of the second PDL format-may be used. In the case of a set of overlapping objects, some of which have transparency, the set of objects would then still remain editable after conversion to the second PDL format.

The first PDL is a universal format such as PDF 1.4 or later, or the PDL format generated by Adobe Illustrator version 9 or later.

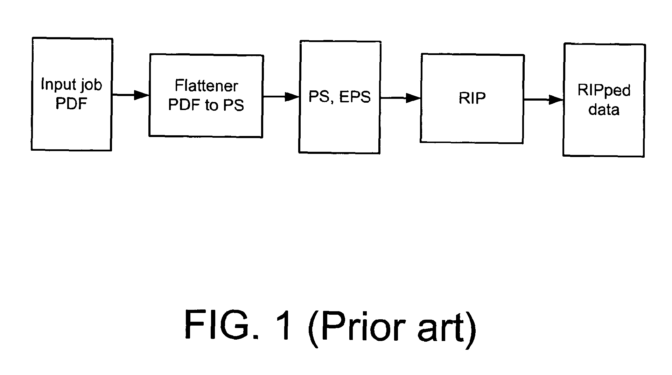

As one example of the prior art, consider FIG. 1 that shows an input job, e.g., a document that is in a first PDL format that supports transparency, e.g., PDF 1.4 (or later version), a "universal" format in that it is commonly used, even though it is proprietary. Suppose there are some linework objects in the input job that use the transparency feature of PDF 1.4. A prior-art application such that can read PDF 1.4 and that provides for flattening, e.g., Adobe Illustrator V9 or later (Adobe Systems, Inc, San Jose, California) can flatten a page, either manually or using the "Save As" or "Export" to make an EPS or another file, or by printing the page to disk, which converts the page to the PostScript PDL. Flattened formats include PostScript, EPS, DCS, PDF 1.2 and 1.3, GIF, JPEG, BMP, and non-PhotoShop 6.0 TIFF images. The PS or EPS flattened file can now by RIPped to generate RIPped data, e.g., for an imagesetter or printing device.

The PDF format is a format that contains statements in a page description language (PDL), which, when interpreted, generate a display list of graphical objects such as line work (including text), continuous tone (CT, contone) images, paths (a set of vector or spline segments that describe a shape or set of line segments), bounding boxes ("invisible" rectangles that define the boundaries of an object), *etc*. Each of the objects has one or more properties. The display list is typically rasterized (raster image processed, "RIPped") prior to printing or display.

Another common PDL is PostScript (PS). PDF is much richer than PS in that it includes many features not supported by PS. One such feature is transparency. True PDF RIPs do not yet exist, so RIPping PDF typically includes either converting the PDF to PS for which RIPs commonly exist, or removing those features not supported by common RIPs, including flattening the transparency. Furthermore, there may be applications into which PDF files may need to be imported. Presently, importing objects or sets of overlapping objects that include transparency includes flattening at least some of these objects. Flattening is described in the Background Section above. Similarly, there may be an application that supports transparency.

Thus, referring to FIG. 1, if there are some linework objects that use the transparency feature, these will be flattened to pixel data that may not provide as sharp edges as maintaining the data in linework format. Furthermore, there may be some objects that are to be printed in spot colors and/or using special inks, and these may be flattened into separations in standard process inks. Thus, problems may arise with the prior are method process shown in FIG. 1.

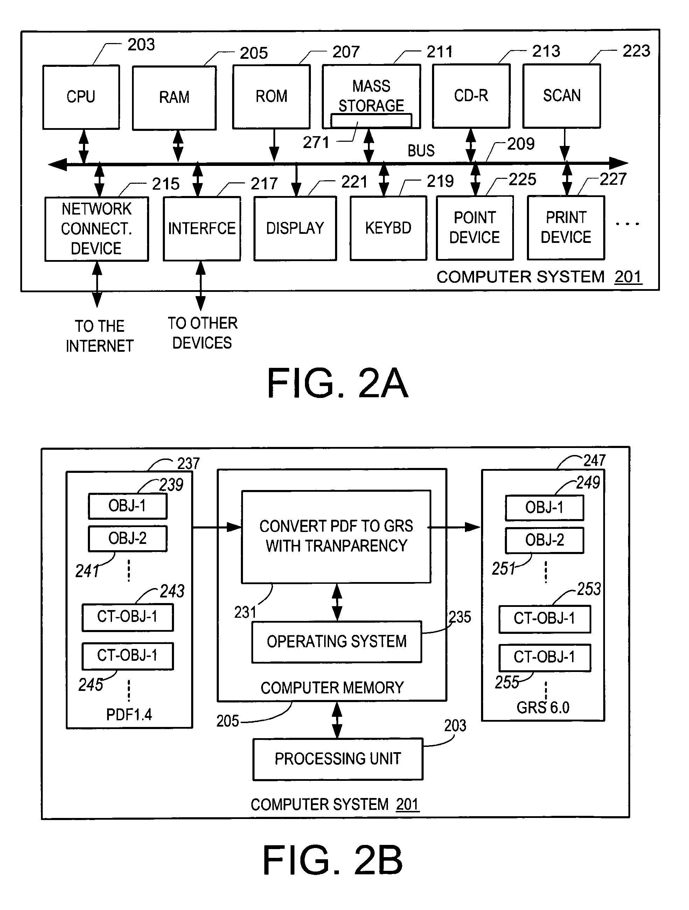

One embodiment of the present invention is implemented on a computer system. FIG. 2A shows a typical computer system 201. An exemplary computer system 201 may be but is not limited to a personal computer such as one made by Apple®, Dell®, IBM®, or other such company. Exemplary computer system 201 may also include a workstation such as one made by Sun Microsystems, Inc., a server computer such as one made by IBM®, Sun Microsystems, Inc., or other such company, a personal digital assistant (PDA), a network computer (NC), or other such device. Any such computer system may be used in accordance with an embodiment of the present invention.

As shown in FIG. 2A, computer system 201 preferably includes a central processing unit (CPU) 203, a random access memory (RAM) 205, a mass storage device 211, a display 221, a pointing device 225, and a keyboard 219. Computer system 201 may also include read only memory (ROM) 207, a CD-R device 213, an input scanner 223, a printing device 227, and a device 215 for connecting to a network such as a local area network (LAN). The LAN may in turn be connected the Internet. Various other input/output devices may be included. One or more busses, shown symbolically in FIG. 2A as a single bus 209 interconnect the various components.

The computer system 201 may actually include multiple physical and logical devices connected in a distributed architecture. Accordingly, an interface 217 may be included and used to provide data communication with other devices that are part of computer system 201.

FIG. 2B shows an implementation of one embodiment of the invention method-a process 231-operating in computer system 201. Process 231 is shown loaded into computer memory 205 of computer system 201 and operating under control of an operating system 235, which is also shown in memory 205. Note that for simplicity, the memory 205 is shown directly connected to the CPU 203, and it will be understood that a bus 209 (not shown in Fig. 2B but illustrated in Fig. 2A) and one or more caches (not shown) are typically involved. Furthermore it is understood that FIG. 2B is a simplification. For example, not all of process 231 or of the operating system 235 is in memory 205 at any one time.

The process 231 receives as input data 237 in the first PDL format that supports transparency, and converts the input data into data 247 in the second PDL format. In one embodiment, the first PDL format is the universal PDL PDF 1.4 or later. In another embodiment, the first PDL is the file format used in Adobe Illustrator V9 or later files. Illustrator is so commonly used by professionals in the graphic arts, that its file format (those that have ".ai" extension in Microsoft Windows format, or that have creator "ART5" and type "PDF" in an Apple Macintosh OS9 or under environment). The second PDL format supports a set of transparency features. One or more graphic applications that each supports transparency, e.g., a RIP or a design program is available for the second PDL format. By a graphic application supporting transparency is meant that the graphic application maintains linework objects with transparency as linework with transparency, and maintains objects in a special ink such as a spot color in that special ink. In the case of a RIP, a RIP that supports transparency properly renders linework objects with transparency as linework, and renders objects with transparency and in a special ink such as a spot color in that special ink.

In one embodiment, the set of features supported in the second PDL format includes support for linework objects that have transparency, and support for objects defined in a special ink such as a spot color ink or a metallic ink. Preferably, the second PDL supports all graphic objects having transparency, including linework, text -- usually implemented as linework, , pixel data, e.g. CT, smooth blends, and so forth. One such other format is GRS^{TM} (Esko-Graphics, NV, Gent, Belgium, the assignee of the present invention, formerly Barco Graphics, NV) the native internal format used by Esko-Graphics. GRS is an extension of Barco Graphics' GRO PDL, an earlier format that is used in design applications.

An aspect of the invention converts the job provided as input data 237 in the first PDL format to a job in the second PDL format that supports at least a subset of the transparency modes supported by the first PDL format. By transparency mode is meant transparency using a blend mode. Thus, the specification of transparency in the first PDL format including specifying a blend mode. The converting includes converting those transparency modes in the first PDL format that are supported in the second PDL format to the corresponding transparency specifications in the second PDL format. One embodiment uses GRS as the second PDL format. Another uses GRO.

Like other PDLs, a GRO or GRS file contains a list of objects, which, when interpreted, generates graphic objects such as linework, including text, CT images, paths-each a set of one or more vector or spline (In GRS) segments that describes a shape or set of line segments, bounding boxes-"invisible" rectangles that define the boundaries of an object), and so forth. Paths may have attributes such as stroke and fill, and may define, among other things, bounds of objects, objects themselves, and clipping masks which, when associated with an object, define which part of the object is visible. Linework, paths, CT images, and so forth may also each have transparency. Interpreting a GRO or GRS file generates a display list of objects, and these objects may be RIPped prior to printing or display.

Thus, referring to FIG. 2B, the input data 237 in PDF 1.4 may contain one or more linework objects, shown as OBJ-1 239, OBJ-2 241, and so forth. The input data 237 may also include one or more continuous tone (CT) objects, shown as CT-OBJ-1 243, CT-OBJ-2 245, and so forth.

The process 231 includes parsing the PDF data and converting each object in the PDF format to an equivalent object in the GRS format. The process includes locate any and all objects that have transparency. For each such object, the transparency feature is converted to the corresponding GRS feature in the case the transparency mode of the object has a corresponding GRS transparency mode. PDF 1.4 supports more transparency modes than does GRS. In one embodiment, the process 231 includes searching for those objects in the input data 237 that have a transparency mode not supported by the second PDL format. In one embodiment, such objects are tagged with an annotation that the transparency mode is unsupported. The user can scan those objects not correctly converted in the second PDL format

In another embodiment, if one or more of the set of objects in a particular region of a page of input data 237 has a transparency mode not supported in the second PDL format and none of the objects in the particular region is a linework object and none of the objects in the particular region uses a spot color or special ink, the user may set as an option flattening the set of objects in the region as part of the process 231 of converting.

The result of process 231 is the data 247 in the second PDL format, e.g., GRS. Each linework object in input data 237, e.g., 239 and 241, is converted to a corresponding GRS object in data 247, e.g., linework objects 249 and 251, respectively. Similarly, each CT object in input data 237, e.g., 243 and 245, is converted to a corresponding GRS object in data 247, e.g., CT objects 253 and 255, respectively.

Another method embodiment of the invention checks data in the first PDL format for convertibility to data in the second PDL. The method includes receiving the data in the first PDL format, parsing the received data, and, for any object that includes transparency of a transparency mode not having a corresponding transparency mode in the second set, tagging the object with an annotation indicating that no corresponding mode exists in the second PDL format.

Once the data is converted into the second PDL, it may be input to an application that works with the second PDL. It may, for example, be RIPped if a RIP exists for the second PDL.

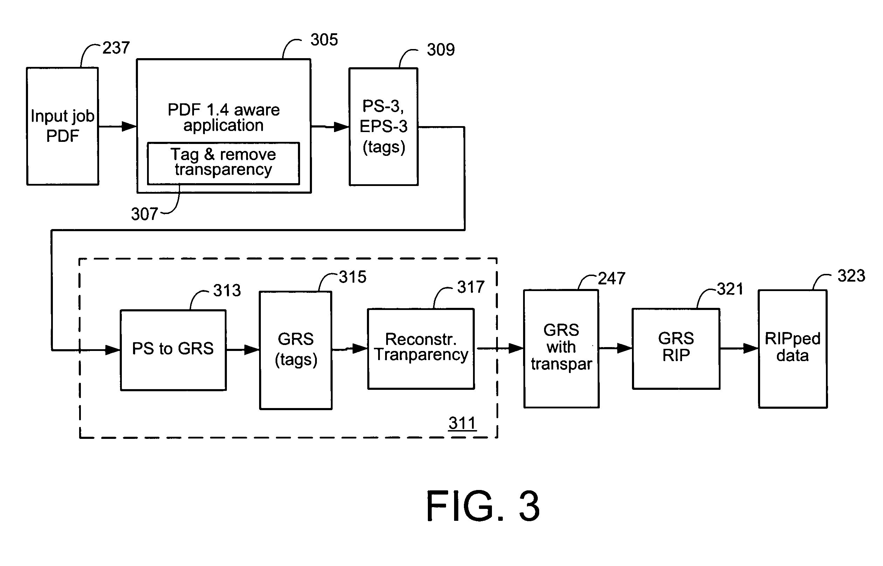

One method embodiment of the invention that first converts the input format to an intermediate is shown in FIG. 3. One embodiment uses a first application 305 that can parse the first PDL format. That application is used to parse the input data 237 and to find all objects in that have a transparency property set. For each such object, in a step 307, the transparency feature is turned off, and the object is tagged by replacing the transparency specification with an annotation that indicates transparency and from which the transparency specification can be obtained. In one embodiment, turning off the transparency makes the previously transparent object opaque.

The step 307 is a first step in the process of converting the data in the first PDL format that supports transparency to data in the second PDL format that supports a set of transparency features. For example, one or more graphic applications may be available for the second PDL.

In the case that the first PDL is PDF 1.4, because PDF 1.4 supports more transparency modes than does GRS, in one embodiment, the step 307 includes searching for those objects in the input file 237 that have a transparency mode not supported by the second PDL format. Such objects are tagged with an annotation that the transparency mode is unsupported.

In one embodiment, if one or more of the set of objects in a region of a page has a transparency mode not supported in the second PDL format and none of the objects in the region is a linework object and none of the objects in the region uses a spot color or special ink, the user may set as an option flattening the set of objects in the region. In one embodiment, the resulting flattened object is tagged with an annotation that indicates it has been flattened.

In one embodiment, the application 305 used is Adobe Illustrator (version 9 or later). Adobe Illustrator (V9 or 10) uses PDF 1.4-believed to be a subset of full PDF 1.4-as its native format. Adobe Illustrator further provides a mechanism for a user to write a "plug-in" application, e.g., as C language commands. One embodiment of step 307 uses Illustrator (V9 or 10) and a plug-in, the relevant parts of which are shown as 307. Illustrator is a graphic application that is widely available to professionals who work in packaging artwork design. Thus, such an embodiment is suitable for packaging work. The process of step 307, implemented in one embodiment as a plug-in, scans checks each object in the input data 237 and, if the object uses transparency, removes the transparency, and tags the object with an annotation that identifies the object as having transparency, and includes the transparency specification of the object so that the transparency specification can be obtained form the annotation.

Adobe Illustrator provides for annotating an object and provides a mechanism for a plug-in to maintain the annotation in any exported file. The annotation is text called a "Note" in Illustrator. One can enter up to 240 characters in the Note text. When Illustrator saves the artwork via the plug-in, e.g., in PostScript, the annotation appears in a PostScript Procedure called "XT."

In one embodiment, each annotation for an object that included transparency in the input data 237 starts with "TRANSP:" Following the "TRANSP:" is the specification of the transparency, including the blend mode (also called blend function) and the alpha. See later for a discussion of transparency and blend modes.

In one embodiment, application 305 includes converting the data into an intermediate format that, in such an embodiment is PostScript. Adobe Illustrator, for example, outputs PostScript V3 or EPS V3. In the prior art, any object in the PDF input that had transparency would be flattened. Because none of the objects now have transparency, the flattening that would otherwise be included the conversion to PS or EPS is not invoked. The output of application 305 is an intermediate format, e.g., PS (PS-3) or EPS (EPS-3) file 309, with the annotations intact.

Another embodiment uses Adobe Acrobat (v 5 or higher) for application 305. Adobe Acrobat also provides a plug-in mechanism, an Application Programmers Interface (API), and also allows for annotating objects with text. See for example the Marked Content and the Marked-content operators in the PDF specification published by Adobe.

In a step 313, the intermediate format (PS or EPS) file 309 is converted to the second PDL format, e.g., GRS, with the tags intact. In one embodiment, the step is implemented with a PostScript Interpreter called CertIn® (Esko-Graphics, NV, Gent, Belgium). CertIn has been certified by Adobe Systems Inc. and is used in Esko Graphics software where PostScript input data is used. The output of step 313 is data 315 in the GRS format, with the tags intact in each object, but no objects that have transparency.

A step 317 includes, for each tagged objects whose annotation indicates a transparency specification that is supported by the second PDL format, reconstructing the transparency specification in the second PDL format. In one embodiment, an error message is generated for each tagged object whose annotation includes a transparency specification not supported by the second PDL format. The error messages are displayed to the user and the user is provided with a choice of replacing the unsupported specification with an alternate.

The result of step 317 is a data 247 in the second (GRS) format. That file includes transparency for any objects that had transparency mode in the original file that is supported in the second PDL format.

The GRS file 247 is editable. In particular, the GRS data 247 can now be used by a graphic application that uses the second (GRS) format and that understands transparency. One such application is a RIP. Another is a workflow program. FIG. 3 shows a RIP 321 that converts the GRS data 247 into raster (RIPped) data 323. The RIPped data, for example, may be used to make printing plates.

### The Transparency Specification

PDF 1.4 provides a rich set of transparency modes. The Second application may not support all these modes. GRS, for example, has fewer modes than does PDF 1.4.

Specifying transparency is part of describing how colors are rendered. In the transparency model, the result color is a function of both the color being "painted", called the foreground color, and the color being painted over, called the background color. Both of these colors may vary as a function of position on the page. Consider some fixed point in the page and assume a fixed foreground and background color. Other parameters in this computation are the alpha, which specifies the relative contributions of the foreground and background colors, and the blend mode, which allows one to customize how the foreground and background colors are combined in the painting operation. Different blend modes lead to different transparency modes. The resulting color is determined according to a compositing formula. Such a function determines the color result of a painting operation and the resulting alpha of the compositing operation. That is, the compositing formula provides the color resulting from the compositing, denoted C, and the value of alpha for the resulting color, denoted α_{C}. The inputs are the background color, denoted B, the value of alpha for the background color, denoted α_{B}, the foreground color, denoted F, the value of alpha for the foreground color, denoted α_{F}, and what the particular blending function is. The reader is referred to Adobe's above-referenced Technical note #5407 titled *Transparency in PDF* for more details, where a slightly different notation is used for each of these quantities.

Note that each of the foreground and background colors have several color components, and the compositing formula applies to each color. The formulae in Adobe's above-referenced Technical note #5407 assume each color and the alpha values to be in the range of 0 to 1. A color of value 0 is black. The meaning of the color components depends on the color model. In ink based models, i.e., using subtractive color model, the components may be the process inks CMY and K, or may be specified in terms of special inks, e.g., spot colors. Other models may include different coordinate systems, that may then be converted to inks by a color separation process.

While the PDF 1.4 specification defines many different types of blend functions leading to different transparency modes, and uses different kinds of color models, only a subset are supported by GRS, the second PDL format. GRS, being aimed at print professional, supports only ink-based color models. Furthermore, PDF 1.4 allows the blending effects to be limited to only some of the overlapping graphical elements. This subset is called a transparency group. GRS does not support transparency groups.

In GRS, the appearance color when there are a set of overlapping objects is determined sequentially as follows. The first object is the first background, and the second object is the first foreground. The result of compositing the first and second object becomes the next background. Thus, the current compositing result is determined by applying the compositing formula to the previous compositing result (the present background) and the color of next object, i.e., the present foreground, in the order of the objects. This pairwise compositing is carried out until all objects have been included. the result of each compositing process becomes the background for the next compositing.

Table 1 shows the blend functions used in transparency modes that are supported by GRS version 6, and their PDF 1.4 equivalents. The reader is referred to Adobe's above-referenced Technical note #5407 for more details.

**Table 1**

| **Name** | **Adobe equivalent** | **Definition/Description** |
|---|---|---|
| BGOpaque | Normal | BGOpaque(B,F) = F Ignores the existing background color. |
| BGOverprint | Darken | BGOverprint(B,F)=max(B,F) for inks, i.e., subtractive colors. |
| BGAdd | Multiply | BGAdd(B,F)=B F |

In one embodiment, each alpha is specified as a number in the range of 0 to 1. In another, the alpha is entered as a percentage between 0 and 100. Thus, an annotation

for replacing the Multiply blend with alpha being 60% (in a model where alpha is a percentage) would be
(TRANSP: A=60;MULT)
and the PostScript (e.g., EPS-3) file 309 generated by step 307 (when the application 305 is Illustrator 9 or Illustrator 10) would contain:
(TRANSP: A=60;MULT) XT
where XT is the command that Illustrator (9 or 10) places in the EPS file after each annotation to indicate the annotation.

The resulting GRS file 247 with transparency would include the transparency specification of BGOpaque with the same value of alpha, i.e., corresponding to 60%.

Thus, a method to convert a file in a first PDL format that supports a first set of transparency modes to a second PDL format that supports a second set of transparency modes has been described. The set of transparency modes supported by the second PDL format includes at least a subset of the modes supported by the first PDL format. The second PDL format is one for which a RIP that supports transparency is available.

In one embodiment, the method may be implemented in software. The software may be provided in as a product, e.g., a carrier medium carrying computer readable code segments that cause one or more processors of a processing system, e.g., system 201, to implement the method. The carrier medium may be a magnetic medium, e.g., part of the mass storage 211. The carrier medium may alternately be an optical medium, e.g., an optical compact disk CD. The carrier medium may alternately be in the form of signals transmitted to the computer system, e.g., over a network.

The software program may be used as an export module from the first PDL format to a second PDL format in a graphic application that uses the first PDL as its internal format. The software program may also be used as an import module from the first PDL to the second PDL in an application that uses the second PDL as its internal format. The software program may also be used in a RIP that can RIP the second PDL.

FIG. 2A indicates by reference numeral 271 one embodiment of the carrier medium in mass storage 211.

Also disclosed is an apparatus to convert a file in a first PDL format that supports transparency to a second PDL format that supports transparency. For example, a computer that includes software that implements the method is such an apparatus. Such an apparatus may be used, for example, in a RIP device that accepts PDF data and that generates rasterized data, e.g., for input to an imagesetter or platemaker or proofing device.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

It will be appreciated by those in the art that the invention is not limited to using GRS or GRO as the second PDL format. Alternatively, the second PDL format may be another object-oriented graphic format that supports transparency for which one or more graphic applications that supports transparency may exist. ArtPRO Nexus (Artwork Systems NV, of Gent Belgium) are applications that use PDL formats that support transparency. Similarly, Macromedia Freehand (Macromedia Incorporated, San Francisco, California) uses an internal format that supports transparency. Other graphic applications may also exist or become known that use PDL formats support transparency.

While the specification and claims use the term "PDL" for the formats, e.g., the second format, nothing herein should imply that these formats are necessarily in the form of commands in a language. The term PDL format thus includes any format or representation that can represent sets of objects and their attributes, including supporting linework and CT objects, and that sufficiently describes how the objects should appear.

The term universal PDL means a PDL that may be proprietary, but that becomes ubiquitous, so that, for example, different graphic applications import or export to it. The two universal PDL formats that support transparency are Adobe PDF 1.4 or later, and the Adobe Illustrator (v9 or later) file format. The Illustrator (v9 or later) file format is a subset of PDF 1.4, so the term "Portable Document Format or a subset thereof" when describing a universal PDL that supports transparency means PDF 1.4 or later and includes the Illustrator (v9 or later) file format. In the future, other PDLs may become universal.

It also will be appreciated by those in the art that the invention is not limited to using Adobe Illustrator (V9 or later) as the program that parses PDF 1.4. Other programs are known that can parse PDF. For example, pre-flight programs are known for checking the integrity of the contents of PDF graphic files. A pre-flight program typically parses the PDF graphic file, searches for all references, and lists all references such as fonts, color profiles, layout instructions, graphic elements, etc., so that their existence and compatibility with some output device such as a printer or transmission device is verified prior to sending the file to the output device. Such searching for referenced objects is called traversing the set of referenced objects. Examples of pre-flight programs include Instant PDF V2.0 or later, Enfocus PitStop Professional V5.0 or later, and Enfocus PitStop Server V2.0 or later.

Some such pre-flight programs provide criteria for selecting objects and for automatically modifying one or more properties of these objects. Such a program can be used to search for all instances of transparency, tag any object that has transparency, the tagging adding an annotation to each tagged object that indicates transparency and includes the original transparency specification so that the corresponding transparency specification can be reconstructed in the second PDL format.

Thus, while there has been described what is believed to be the preferred embodiments of the invention, those skilled in the art will recognize that other and further modifications may be made thereto without departing from the spirit of the invention, and it is intended to claim all such changes and modifications as fall within the scope of the invention.

## Claims

1. A method to convert data in a first PDL format to data in a second PDL format, the method comprising:
receiving the data in the first PDL format, the first PDL format being a universal PDL format that supports objects having transparency, the first PDL format supporting a first set of transparency modes;
parsing the received data;
converting each object in the first PDL format to a corresponding object in the second PDL format, the second PDL format being a PDL format that supports objects having transparency, the second PDL format supporting a second set of transparency modes,
the converting of any particular object including:
for any object that includes transparency of a transparency mode having a corresponding transparency mode in the second set, converting the transparency and transparency mode in the first PDL format to the corresponding transparency and transparency mode in the second PDL format,
such that the objects that have transparency are editable in the second PDL format.

2. A method as recited in claim 1, wherein the first universal PDL format that supports transparency is Portable Document Format or a subset thereof.

3. A method as recited in any of the previous claims, wherein the second PDL format is one for which a RIP is available, said available RIP supporting transparency.

4. A method as recited in any of the previous claims, wherein the converting of each object in the first PDL format to a corresponding object in the second PDL format includes
for any object that includes transparency of a transparency mode not having a corresponding transparency mode in the second PDL format, tagging the object with an annotation indicating that no corresponding mode exists in the second PDL format.

5. A method as recited in any of the previous claims, wherein the converting of each object in the first PDL format to a corresponding object in the second PDL format includes
for any region that includes a set of objects that has at least one object having transparency of a transparency mode not having a corresponding transparency mode in the second PDL format, the set of objects not including any linework object or any object that has a non-process ink, flattening the set of objects.

6. A method as recited in any of the previous claims wherein the second set of modes includes a subset of the first set of modes.

7. A method as recited in claim 6, wherein the transparency modes in the first PDL format for which a corresponding transparency mode exist in the second PDL format include one or more of the set consisting of the Multiply blend function, the Darken blend function, and the Normal blend function.

8. A method as recited in any of the previous claims, wherein the converting of each object in the first PDL format to a corresponding object in the second PDL format includes:
converting each object in the first PDL format to a corresponding object in an intermediate format, the converting of any particular object to a corresponding object in the intermediate format including:
for any object that includes transparency with a transparency mode for which a corresponding transparency mode exists in the second set, removing the transparency, and tagging the object with an annotation indicating transparency and from which the original transparency specification can be obtained; and
converting the object in the intermediate format to a corresponding object in the second PDL format, the converting of any particular object in the intermediate format to a corresponding object in the second PDL format including :
replacing any annotation indicating transparency with a specification in the second PDL format that corresponds to the original transparency specification in the annotation.

9. A method as recited in claim 8, wherein the converting of each object in the first PDL format to a corresponding object in the intermediate format includes
for any object that includes transparency of a transparency mode not having a corresponding transparency mode in the second set, tagging the object with an annotation indicating that no corresponding mode exists in the second PDL format.

10. A method as recited in any of claims 8 or 9, wherein the converting of each object in the first PDL format to a corresponding object in the intermediate format includes
for any region that includes a set of objects that has at least one object having transparency of a transparency mode not having a corresponding transparency mode in the second PDL format, the set of objects not including any linework object or any object that has a non-process ink, flattening the set of objects.

11. A method as recited in any of claims 8 to 10, wherein the intermediate format is PostScript.

12. A method to check data in a first universal PDL format for convertibility to data in a second PDL format, the second PDL format supporting transparency, the method comprising:
receiving the data in the first PDL format, the first PDL format being a PDL format that supports objects having transparency, the first PDL format supporting a first set of transparency modes;
parsing the received data; and
for any object that includes transparency of a transparency mode not having a corresponding transparency mode in the second PDL format, tagging the object with an annotation indicating that no corresponding mode exists in the second PDL format.

13. A method as recited in claim 12, wherein the first PDL format that supports transparency is Portable Document Format or a subset thereof.

14. A carrier medium carrying one or more code segments to instruct a processor of a processing system to convert data in a first universal PDL format to data in a second PDL, the converting comprising:
receiving the data in the first PDL format, the first PDL format being a PDL format that supports objects having transparency, the first PDL format supporting a first set of transparency modes;
parsing the received data;
converting each object in the first PDL format to a corresponding object in the second PDL format, the second PDL format being a PDL format that supports objects having transparency, the second PDL format supporting a second set of transparency modes,
the converting of any particular object including:
for any object that includes transparency of a transparency mode having a corresponding transparency mode in the second set, converting the transparency and transparency mode in the first PDL format to the corresponding transparency and transparency mode in the second PDL format,
such that the objects that have transparency are editable in the second PDL format.

15. A carrier medium as recited in claim 14, wherein the first universal PDL format that supports transparency is Portable Document Format or a subset thereof.

16. A carrier medium as recited in any of claims 14 or 15, wherein the second PDL format is one for which a RIP is available, said available RIP supporting transparency.

17. A carrier medium as recited in any of claims 14 to 16, wherein the converting of each object in the first PDL format to a corresponding object in the second PDL format includes
for any object that includes transparency of a transparency mode not having a corresponding transparency mode in the second PDL format, tagging the object with an annotation indicating that no corresponding mode exists in the second PDL format.

18. A carrier medium as recited in any of claims 14 to 17, wherein the converting of each object in the first PDL format to a corresponding object in the second PDL format includes
for any region that includes a set of objects that has at least one object having transparency of a transparency mode not having a corresponding transparency mode in the second PDL format, the set of objects not including any linework object or any object that has a non-process ink, flattening the set of objects.

19. A carrier medium as recited in any of claims 14 to 18, wherein the second set of modes includes a subset of the first set of modes.

20. A carrier medium as recited in any of claims 14 to 19, wherein the converting of each object in the first PDL format to a corresponding object in the second PDL includes :
converting each object in the first PDL format to a corresponding object in an intermediate format, the converting of any particular object format to a corresponding object in an intermediate format including:
for any object that includes transparency with a transparency mode for which a corresponding transparency mode exists in the second set, removing the transparency, and tagging the object with an annotation indicating transparency and from which the original transparency specification can be obtained;
receiving data in the intermediate format;
parsing the received intermediate format data;
converting each object in the intermediate format to a corresponding object in the second PDL format, including
replacing any annotation that indicates transparency with the corresponding specification of transparency in the second PDL format, including the converting the original transparency specification to a specification in the second PDL format.

21. A carrier medium as recited in claim 20, wherein the intermediate format is PostScript.

22. A carrier medium as recited in any of claim 14 to 21, wherein the transparency modes in the first PDL format for which corresponding transparency modes exists in the second PDL format include one or more of the set consisting of a mode that uses the Multiply blend function, a mode that uses the Darken blend function, and a mode that uses the Normal blend function.

23. A carrier medium carrying one or more code segments to instruct one or more processors of a processing system to check data in a first universal PDL format for convertibility to data in a second PDL, the second PDL format supporting transparency, the checking comprising:
receiving the data in the first PDL format, the first PDL format being a PDL format that supports objects having transparency, the first PDL format supporting a first set of transparency modes;
parsing the received data; and
for any object that includes transparency of a transparency mode not having a corresponding transparency mode in the second set, tagging the object with an annotation indicating that no corresponding mode exists in the second PDL format.

24. An apparatus to convert data in a first universal PDL format to data in a second PDL, the apparatus comprising:
means for receiving the data in the first PDL format, the first PDL format being a PDL format that supports objects having transparency, the first PDL format supporting a first set of transparency modes;
means for parsing the received data;
means for converting each object in the first PDL format to a corresponding object in the second PDL format, the second PDL format being a PDL format that supports objects having transparency, the second PDL format supporting a second set of transparency modes,
the means converting of any particular object,
for any object that includes transparency of a transparency mode having a corresponding transparency mode in the second set, converting the transparency and transparency mode in the first PDL format to the corresponding transparency and transparency mode in the second PDL format,
such that the objects that have transparency are editable in the second PDL format.

25. An apparatus as recited in claim 24, wherein the first universal PDL format that supports transparency is Portable Document Format or a subset thereof.

26. An apparatus as recited in any of claims 24 or 25, wherein the second PDL format is one for which a RIP is available, said available RIP supporting transparency.

27. An apparatus as recited in any of claims 24 to 26, wherein the second set of modes includes a subset of the first set of modes.

28. An apparatus as recited in any of claims 24 to 27, wherein the means for converting each object in the first PDL format to a corresponding object in the second PDL format includes :
means for converting each object in the first PDL format to a corresponding object in an intermediate format, the converting of any particular object format to a corresponding object in an intermediate format including:
for any object that includes transparency with a transparency mode for which a corresponding transparency mode exists in the second set, removing the transparency, and tagging the object with an annotation indicating transparency and from which the original transparency specification can be obtained;
means for receiving data in the intermediate format;
means for parsing the received intermediate format data;
means for converting each object in the intermediate format to a corresponding object in the second PDL format, the converting including replacing any annotation that indicates transparency with the corresponding specification of transparency in the second PDL format, including the converting the original transparency specification to a specification in the second PDL format.
